# EUROPEAN PATENT APPLICATION

(11) **EP 2 523 087 A1**
(43) Date of publication of application: **14.11.2012**
(21) Application number: 11813861.9
(22) Date of filing: 11.03.2011
(51) Int. Cl.: G06F 3/048

(54) **PRESENTATION SYSTEM AND PORTABLE TERMINAL**

(71) Applicant: Nakamura, Yoshikazu, Aichi 486-0927 (JP)
(72) Inventor: Nakamura, Yoshikazu, Aichi 486-0927 (JP)
(74) Representative: Johnson, Yvonne Catherine
(86) International application number: PCT/JP2011/055820
(87) International publication number: WO 2012/124031

(57) **Abstract**

Provided is a presentation system in which data communication is performed between a presenter-side viewing terminal with which a presenter views a slide image prepared in advance to make a presentation; and an audience-side viewing terminal with which an audience views the slide image, whereby the slide image designated at the presenter-side viewing terminal is displayed on the audience-side viewing terminal. The presentation system includes an audience-side portable terminal that receives an input operation by the audience. Upon receipt of the input operation by the audience, the audience-side portable terminal stores memo information indicating a content of the input operation; obtains a slide ID used to identify the slide image being displayed on the audience-side viewing terminal; and records the memo information in association with the slide ID.

## Description

### TECHNICAL FIELD

The present invention relates to a presentation system that can be used in various occasions such as a conference, a lecture, and a training; and a portable terminal used in the presentation system.

### BACKGROUND ART

A conventional presentation system is known which includes a presenter-side viewing terminal with which a presenter views a slide image prepared in advance to make a presentation; and an audience-side viewing terminal with which an audience views the slide image. In the conventional presentation system, a slide image designated at the presenter-side viewing terminal is displayed on the audience-side viewing terminal by performing data communication between the both terminals (see Patent Document 1, for example).

By using the presentation system, in which the slide image is displayed on the audience-side viewing terminal assigned to each audience, a visibility for the audience is improved compared to a system in which a slide image is displayed on a screen using a projector or the like. Therefore, it becomes possible for the presenter to have the audience surely recognize the slide image designated by the presenter himself/herself.

### PRIOR ART DOCUMENTS

### PATENT DOCUMENT

Patent Document 1: Japanese Unexamined Patent Application Publication No. 2010-176250

### SUMMARY OF THE INVENTION

### PROBLEMS TO BE SOLVED BY THE INVENTION

However, the conventional presentation system has a problem that, when the audience has transcribed necessary matters written on a whiteboard (i.e., when the audience has made notes) using a memo function generally installed in various terminals, the audience may later get confused about to what explanations in the presentation the notes correspond.

Further problem is that, when the audience uses the memo function of the audience-side viewing terminal, another window must be displayed and, therefore, a display area of the slide image becomes narrower, which leads to decreased visibility.

To solve these problems, the present invention has an object to provide a presentation system and a portable terminal capable of recording contents of a presentation in a rational manner.

### MEANS FOR SOLVING THE PROBLEMS

A presentation system as a first invention made to achieve the above object is a system in which data communication is performed between a presenter-side viewing terminal with which a presenter views a slide image prepared in advance to make a presentation; and an audience-side viewing terminal with which an audience views the slide image, whereby the slide image designated at the presenter-side viewing terminal is displayed on the audience-side viewing terminal.

In the present invention, besides the above audience-side viewing terminal, the system further includes an audience-side portable terminal that receives various input operations by the audience. The audience-side portable terminal is configured, upon receipt of the input operation by the audience, to store memo information indicating a content of the input operation. Furthermore, the audience-side portable terminal is configured to obtain a slide ID used to identify the slide image being displayed on the audience-side viewing terminal when the input operation is received, and to record the memo information in association with the slide ID.

In the presentation system configured as such, when the audience tries to record the memo information, the audience only has to use the audience-side portable terminal. This makes it possible to maintain visibility without narrowing the display area of the slide image on the audience-side viewing terminal. Moreover, since the memo information is recorded in association with the slide ID, it becomes possible for the audience to easily recognize, even at a later time, which slide image was being used for explanation in the presentation when the memo information was recorded.

Consequently, according to the presentation system of the present invention, it is possible to leave the memo information associably with the slide image without diminishing visibility for the audience. Therefore, it is possible to record the content of the presentation in a rational manner.

As an input operation by the audience, a key input operation, a touch input operation, a handwriting input operation, and the like are listed. Furthermore, as a content of such an input operation, various images (photographs, videos, and the like), sounds, and the like are listed as well as characters, symbols, graphics, and the like. In short, the memo information is not limited to data indicating characters, symbols, graphics, and the like but also includes image data and sound data.

Furthermore, in the presentation system of the present invention, since the slide image designated at the presenter-side viewing terminal is displayed on the audience-side viewing terminal, a path through which the audience-side portable terminal obtains the slide ID is not limited to a path from the audience-side viewing terminal but may be a path from the presenter-side viewing terminal.

In addition to leaving the memo information associably with the slide image, it would be preferable to adopt the following configuration in order to effectively utilize the memo information during the presentation.
Specifically, the presentation system of the present invention may be configured such that the audience-side portable terminal transmits the memo information to the audience-side viewing terminal when obtaining the slide ID and that the audience-side viewing terminal displays the memo information on the slide image in a superimposed manner upon receipt of the memo information from the audience-side portable terminal.

According to such a configuration, it is possible to have the audience recognize the memo information in association with the slide image during the presentation. In addition, by displaying the memo information on the slide image, it is possible to provide the audience with an opportunity to deepen understanding of the content of the slide image and to provide some motivation for the audience to get a new inspiration and idea.

When the memo information is left associably with the slide image, it would be preferable to adopt the following configuration in order to record the memo information in a more rational manner.
Specifically, in the presentation system of the present invention, the audience-side viewing terminal may include a user interface that receives the input operation by a user and, after moving a display position of the memo information via the user interface, the audience-side viewing terminal may transmit position information, which indicates the display position of the memo information with respect to the slide image, to the audience-side portable terminal. Furthermore, the audience-side portable terminal may be configured to record the memo information in association with the position information upon receipt of the position information from the audience-side viewing terminal.

In such a configuration, after the memo information is displayed on the slide image during the presentation, the display position may be changed by the audience's drag and drop operation, for example, and as a result, a layout preferred by the audience is decided and the layout can be retained as data. Consequently, the content of the presentation can be recorded in a more rational manner.

In the meantime, the audience-side viewing terminal is not always owned by the audience but, in some cases, the audience uses the audience-side viewing terminal prepared at a presenter-side, only during the presentation. In such a case, it would be preferable to adopt the following configuration to utilize properties of the audience-side portable terminal.

Specifically, besides the presenter-side viewing terminal, the presentation system of the present invention may further include a presenter-side management server that manages the slide image. Upon receipt of a download request from an audience-side management terminal, which is an external terminal, via the Internet network, the presenter-side management server may transmit the slide image to the audience-side management terminal in accordance with the download request.

The presentation system may be further configured such that, when the audience-side management terminal stores the slide image received from the presenter-side management server and receives attendance record information including the memo information, the position information, and the slide ID from the audience-side portable terminal, the audience-side management terminal stores the slide image corresponding to the slide ID while reflecting the memo information in the display position in the slide image based on the position information.

In such a configuration, the audience can take out the attendance record information concerning the presentation just by bringing the audience-side portable terminal to a presentation site. After that, the attendance record information is to be associated with the slide image downloaded from a terminal at office or home (in the audience-side management terminal). Consequently, the audience can manage the content of the presentation by means of the audience-side management terminal in a rational manner.

There is a case where the presenter gives an explanation using a whiteboard or the like and the audience finds difficulty in viewing a written content depending on his/her location. In such a case, it would be preferable to adopt the following configuration.
Specifically, besides the audience-side portable terminal, the presentation system of the present invention may further include a presenter-side portable terminal that receives an input operation by the presenter. The presentation system may be configured such that, upon receipt of the input operation by the presenter, the presenter-side portable terminal transmits supplementary information indicating a content of the input operation to the audience-side portable terminal and that, upon receipt of the supplementary information from the presenter-side portable terminal, the audience-side portable terminal records the supplementary information in association with the slide ID.

According to such a configuration, it is possible to have the audience surely recognize the supplementary information during the presentation. In addition, since the supplementary information can be left associably with the slide image, the content of the presentation can be recorded in a more rational manner.

In such a configuration, it would be preferable to adopt the following configuration to further exploit the properties of the audience-side portable terminal.
Specifically, besides the presenter-side viewing terminal, the presentation system of the present invention may further include the presenter-side management server that manages the slide image. Upon receipt of the download request from the audience-side management terminal, which is an external terminal, via the Internet network, the presenter-side management server may transmit the slide image to the audience-side management terminal in accordance with the download request.

The presentation system may be configured such that, when the audience-side management terminal stores the slide image received from the presenter-side management server and receives the attendance record information including the memo information, the supplementary information, and the slide ID from the audience-side portable terminal, the audience-side management terminal stores the slide image corresponding to the slide ID in association with the memo information and the supplementary information of the slide image.

In such a configuration, since the memo information and the supplementary information are associated with the slide image downloaded from the terminal at office or home (in the audience-side management terminal), the audience can manage the content of the presentation by means of the audience-side management terminal in a more rational manner.

On the other hand, the audience-side management terminal may be configured to set levels of importance in such a manner that the more an information amount of the memo information and the supplementary information associated with the slide image is, the higher the level of importance is, and to display icons that can be linked to the slide images side by side in descending order of the level of importance.

According to such a configuration, it is possible to have the audience effectively review the contents of the presentation in a relatively short amount of time by having the audience recognize the presentation images in the descending order of the level of importance corresponding to the information amount. This is because points emphasized by the presenter during the presentation, points felt to be necessary by the audience, and the like are considered to be proportional to largeness of the information amount.

Furthermore, when the presentation is made, it would be convenient if the audience-side portable terminal is not used merely to record the memo information, the supplementary information, or the like but is provided with various functions as a remote controller for the audience-side viewing terminal.

For example, in the presentation system of the present invention, the audience-side portable terminal may transmit a switch signal used to switch the slide images displayed on the audience-side viewing terminal either in selected descending order or ascending order, and the audience-side viewing terminal may store the slide images in order specified at the presenter-side viewing terminal. Furthermore, the audience-side viewing terminal may be configured to switch a display of the slide images in accordance with the switch signal received from the audience-side portable terminal.

In such a configuration, only the slide images corresponding to the contents already explained or being explained by the presenter are stored in the audience-side viewing terminal. Therefore, even if the switch signal to turn over a page is transmitted from the audience-side portable terminal, the slide images corresponding to the contents not yet explained by the presenter are not to be displayed on the audience-side viewing terminal. On the other hand, when the audience wants to review the slide images already explained by the presenter, such a review is to be allowed. Consequently, it is possible to provide the audience with convenience in which page-turning is carried out by a remote controller operation, while certain restrictions are imposed.

As another example, the presentation system of the present invention may be configured such that the audience-side portable terminal transmits a search signal used to search a term used in the presentation; and the audience-side viewing terminal stores the slide images in the order specified at the presenter-side viewing terminal and displays the slide image, which has been stored the earliest among the slide images including the above term, based on the search signal received from the audience-side portable terminal.

According to such a configuration, since definition or explanation of the term to be searched is considered to be often included in the slide image on which the term first appeared, a probability that information that the audience wants to know can be effectively displayed is increased. Consequently, it is possible to provide the audience with convenience in which term-searching is effectively carried out by a remote controller operation.

A portable terminal as a second invention is a terminal used in a presentation system, in which data communication is performed between a presenter-side viewing terminal with which a presenter views a slide image prepared in advance to make a presentation; and an audience-side viewing terminal with which an audience views the slide image, whereby the slide image designated at the presenter-side viewing terminal is displayed on the audience-side viewing terminal.

In the present invention, the terminal includes a receiving device that receives an input operation by the audience; a storage device that stores memo information indicating a content of the input operation; a slide ID obtaining device that obtains a slide ID used to identify the slide image being displayed on the audience-side viewing terminal when the input operation by the audience is received by the receiving device; and a slide ID addition device that makes the storage device store the memo information in association with the slide ID obtained by the slide ID obtaining device.

The portable terminal configured as such can be preferably used in the presentation system of the first invention.

### BRIEF DESCRIPTION OF THE DRAWINGS

FIG. 1 is a configuration diagram showing an overview of a presentation system to which the present invention is applied.
FIGS. 2A-2B are block diagrams respectively showing a configuration of a supplier-side management server and a configuration of a supplier-side viewing terminal and a client-side viewing terminal.
FIG. 3 is a flowchart showing a microcomputer processing performed by the supplier-side viewing terminal.
FIG. 4 is a flowchart showing a main processing performed by the client-side viewing terminal.
FIGS. 5A-5B are block diagrams respectively showing a configuration of the supplier-side potable terminal and the supplier-side portable terminal, and a configuration of a supplier-side management terminal.
FIGS. 6A-6B are explanatory diagrams respectively showing an embodiment in which a content inputted with a pen is displayed and an embodiment in which the inputted content is transferred.
FIG. 7 is a first flowchart showing a main processing performed by a client-side portable terminal.
FIG. 8 is a second flowchart showing the main processing performed by the client-side portable terminal.
FIG. 9 is a flowchart showing an optional processing performed by the client-side viewing terminal.
FIG. 10 is a flowchart showing an optional processing performed by the client-side portable terminal.
FIG. 11 is a flowchart showing an image management processing performed by a client-side management terminal.
FIGS. 12A-12B are explanatory diagrams respectively showing a constitution of a slide list and an embodiment in which listings in the slide list are sorted.

### DESCRIPTION OF REFERENCE NUMERALS

1... presentation system, 2...internal network, 3... supplier-side terminal group, 4...external network, 5...client-side terminal group, 7...S-management server, 9...C-management terminal, 10... S-viewing terminal, 20... S-portable terminal, 30... C-viewing terminal, 40... C-portable terminal, 50...slide list, 51...search button, 53... memo writing button, 55...reread button.

### MODE FOR CARRYING OUT THE INVENTION

Embodiments of the present invention are explained below with reference to drawings.

### [Entire configuration]

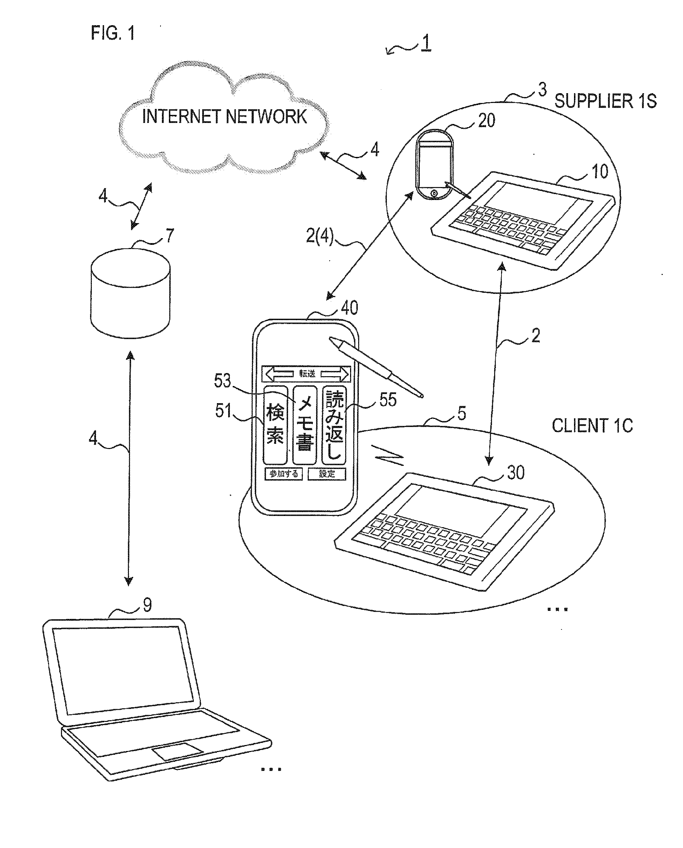

FIG. 1 is a configuration diagram showing an overview of a presentation system 1 to which the present invention is applied.

As shown in FIG. 1, the presentation system 1 is a system used in various occasions such as a conference, a lecture, and a training, and includes a supplier-side terminal group 3 used by a supplier 1S (a supplier) who makes a presentation in such an occasion; and an individual client-side terminal group 5 used by each client 1C (a client) who listens to the presentation made by the supplier 1S.

The presentation system 1 further includes a supplier-side management server (hereinafter referred to as "S-management server") 7 and an individual client-side management terminal (hereinafter referred to as "C-management terminal") 9. The S-management server 7 is used to distribute slide images, which have been prepared in advance by a supplier 1S side (including a management of the presentation, a company that the supplier 1S works for, persons related to the supplier 1S, and the like) for the presentation, from the supplier 1S side at a later time. The client-side management terminal 9 is managed by each client 1C side (including an absentee from the presentation, a company that the client 1C works for, persons related to the client 1C, and the like).

The supplier-side terminal group 3 includes a supplier-side viewing terminal (hereinafter referred to as "S-viewing terminal") 10 with which the supplier 1S views slide images during the presentation; and a supplier-side portable terminal (hereinafter referred to as "S-portable terminal") 20 used by the supplier 1S instead of a whiteboard or the like when making the presentation. On the other hand, the client terminal group 5 includes a client-side viewing terminal (hereinafter referred to as "C-viewing terminal") 30 with which the client 1C views the slide images during the presentation; and a client-side portable terminal (hereinafter referred to as "C-portable terminal") 40 used by the client 1C to take notes, for example, during the presentation.

In the presentation system 1, data communication is enabled between the S-viewing terminal 10 and the C-viewing terminal 30 via an internal network 2 (for example, a wireless LAN or the like) established in a presentation site. Furthermore, each pairing processing has been completed prior to the presentation between the S-viewing terminal 10 and the S-portable terminal 20, and between the C-viewing terminal 30 and the C-portable terminal 40 via near field wireless communication such as infrared ray and Bluetooth (a registered trademark) to enable data communication.

The pairing processing here refers to a known single pairing, which enables a communication connection (a near field wireless communication) from the portable terminals 20, 40 of the users (the supplier 1S, the client 1C, respectively) only to the viewing terminals 10, 30, respectively, assigned to the users themselves.

Moreover, data communication between the S-portable terminal 20 and the C-portable terminal 40 is enabled via the internal network 2 (however, a route through an external network 4 such as a mobile telephone network, a packet communication network, and the Internet network is possible). For example, destination information such as a telephone number and an e-mail address of each of the C-portable terminals 40 is registered in the S-portable terminal 20 prior to the presentation, and the S-portable terminal 20 is so set in advance as to be capable of transmitting such data to all the C-portable terminals 40 collectively.

Furthermore, in the presentation system 1, at least the S-viewing terminal 10, the S-management server 7, and the C-management terminal 9 are made connectable via the external network 4 (including the Internet network).

### [Configuration of the management server]

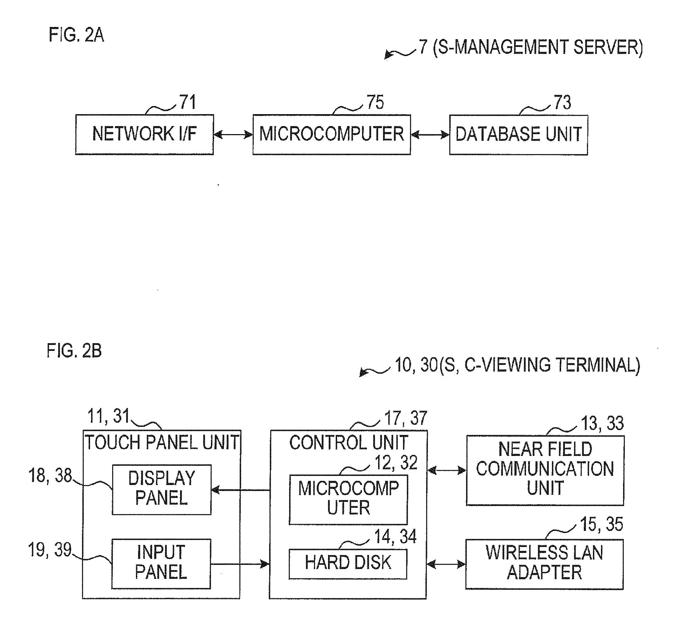

Next, FIG. 2A is a block diagram showing a configuration of the S-management server 7.
As shown in FIG. 2A, the S-management server 7 includes a network I/F 71 used to be connected to the external network 4, a database unit 73 that compiles various data, and a microcomputer 75.

The microcomputer 75 is a known one including a storage unit (a ROM, a RAM or the like) that stores various programs and data for managing the slide images; a CPU that performs the programs stored in the storage unit; an IO port that inputs/outputs various signals; a timer for timekeeping; and the like. At least included in an attribute of each file of the slide image are a slide ID (an ID indicating a title of the presentation and a page number, in the present embodiment) assigned in advance by the supplier 1S side so that each slide image has a different slide ID; and header information including a date and time of the presentation, a site name of the presentation, a name of the supplier 1S, a name of a company, and the like. The database unit 73 is provided with an area in which the slide images are stored in folders separately prepared for each header information.

Every time the CPU of the microcomputer 75 receives a slide image from the S-viewing terminal 10 via the network I/F 71, the CPU stores the received slide image in the database unit 73 so that the received slide image is stored in a folder corresponding to its header information (if such a folder does not exist, in a newly-prepared folder). The CPU thus creates a slide book composed of a bundle of the slide images having the same header information. In short, the slide book consists of the slide images that were used in a single presentation.

Moreover, when the CPU of the microcomputer 75 receives a download request for the slide book from the C-management terminal 9 via the network I/P 71, the CPU transmits an appropriate slide book to the C-management terminal 9 via the network I/F 71 in accordance with the download request. The download request includes a designation ID for designating the slide book (and thus the header information), a password, and the like as information notified in advance to a prospective attendee to the presentation. Specifically, in a case where the designation ID and the password can be confirmed, based on the download request, to be identical with the designation ID and the password notified in advance, the slide book corresponding to the designation ID is to be transmitted to the requestor (the C-management terminal 9).

### [Configuration of the viewing terminal]

Next, FIG. 2B is a block diagram showing a configuration of the viewing terminals 10, 30. The viewing terminals 10, 30 are both configured as a transportable device arranged per seat in the presentation site.

As shown in FIG. 2B, the viewing terminals 10, 30 are configured to respectively include touch panel units 11, 31 as a user interface that receives an input operation by a user, as well as wireless LAN adapters 13, 33, near field communication units 15, 35, and control units 17, 37. The touch panel units 11, 31 are known ones respectively include display panels 18, 38 and input panels 19, 39.

The display panels 18, 38 are constituted, for example, by a thin-model liquid crystal display of A4 size or B5 size or an organic LE display, and display various images.
The input panels 19, 39 are devices respectively arranged on surfaces of the display panels 18, 38 in an integral manner and used to input a touch operation on sections corresponding to various displayed images. As for operating principles of the input panels 19, 39, any of known types such as matrix switch type, resistance film type, surface acoustic wave type, infrared ray type, electromagnetic induction type, and capacitance type may be adopted.

The wireless LAN adapter 13 of the S-viewing terminal 10 is a device used to connect the S-viewing terminal 10 to the external network 4 via a wireless LAN router (not shown) and used when the S-viewing terminal 10 transmits/receives various data to/from the C-viewing terminal 30. The wireless LAN adapter 33 of the C-viewing terminal 30 is a device used when the C-viewing terminal 30 transmits/receives various data to/from the S-viewing terminal 10.

The near field communication units 15, 35 are known communication controllers for performing wireless communication in accordance with a protocol such as Bluetooth (a registered trademark), for example. The near field communication units 15, 35 are configured to receive various signals transmitted from the portable terminal 20, 40, respectively, through radio waves of a specific frequency band within a distance approximately between a few meters and several tens of meters, for example.

The control units 17, 37 are mainly constituted by microcomputers 12, 32, respectively, and hard disks 14, 34, respectively.
The microcomputers 12, 32 are known ones including a storage unit (a ROM, a RAM or the like) that stores various programs and data for control; a CPU that performs the programs stored in the storage unit; an IO port that inputs/outputs various signals; a timer for timekeeping; and the like.

Furthermore, the microcomputers 12, 32 (specifically CPUs, hereinafter omitted) perform a user operation reading processing that reads at least a starting position and a finishing position of a drag-and-drop operation (a release operation after touch and drag with a finger, a pen or the like) on the touch panel units 11, 31, respectively, based on an input from input panels 19, 39, respectively, as well as a position (a touch position) corresponding to the touch operation.

In the hard disk 14 of the S-viewing terminal 10, a plurality of slide images, which have been prepared in advance in order for the supplier 1S to make a presentation, are stored. It is presupposed that these slide images have been transmitted in advance to the S-management server 7 via the wireless LAN adapter 13. It is also presupposed that each slide image has already been provided with the slide ID and the header information as described above by the supplier 1S side.

### [Microcomputer processing in the S-viewing terminal]

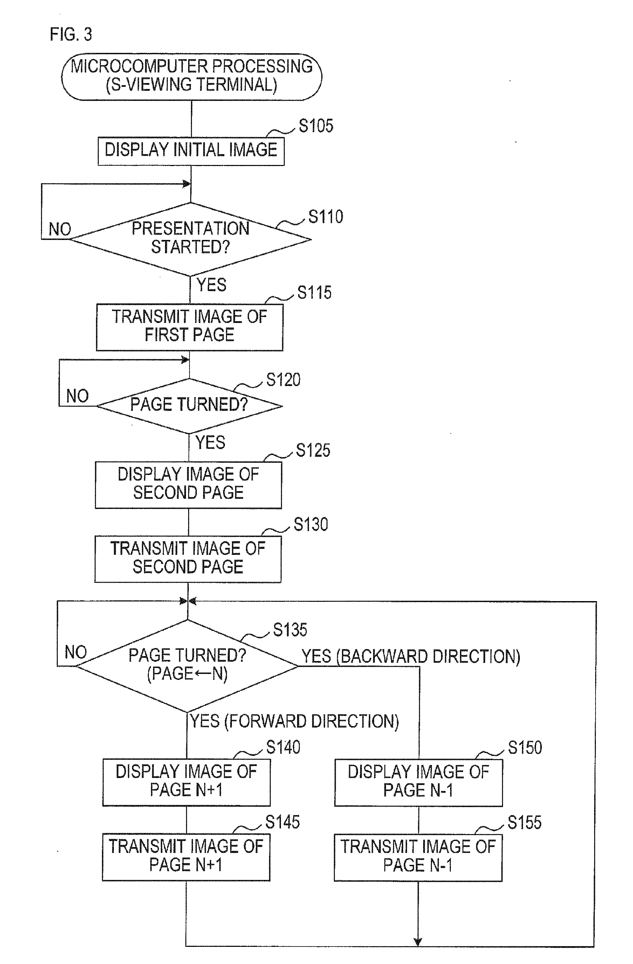

Next, a description will be made as to a processing (a microcomputer processing) performed by the microcomputer 12 of the S-viewing terminal 10 with reference to a flowchart in FIG. 3. The processing is started when an operation to initiate an application (a program) corresponding to the processing is performed by the supplier 1S, and is finished when a completion button included in the slide image of the last page is depressed.

Furthermore, it is presupposed that, when the completion button is depressed via the touch panel unit 11 of the S-viewing terminal 10 during the processing, the microcomputer 12 of the S-viewing terminal 10 transmits a completion signal indicating a completion of the presentation to the C-viewing terminal 30 via the wireless LAN adapter 13.

As shown in FIG. 3, when the processing is started, the microcomputer 12 of the S-viewing terminal 10 displays a slide image of the first page at first, among the plurality of slide images stored in the hard disk 14, on the display panel 18 as an initial image based on the header information (S105). In the initial image, a start button (not shown) for starting the presentation is included.

Then, the microcomputer 12 waits until the start button is depressed via the touch panel unit 11 (S110) and, if the start button has been depressed, the microcomputer 12 transmits the slide image of the first page to the C-viewing terminal 30 via the wireless LAN adapter 13 (S115).

Next, the microcomputer 12 waits until an operation to turn a page forward is performed by the supplier 1S (S120). If such an operation has been performed, the microcomputer 12 displays a slide image of the second page on the display panel 18 (S125) and transmits the slide image of the second page to the C-viewing terminal 30 via the wireless LAN adapter 13 (S130).

A page of a slide image being displayed on the display panel 18 is hereinafter referred to as page N. The microcomputer 12 waits until an operation to turn a page forward or backward is performed by the supplier 1S (S135). If an operation to turn a page forward has been performed, the microcomputer 12 displays a slide image of page N+1 on the display panel 18 (S140), and transmits the slide image of page N+1 to the C-viewing terminal 30 via the wireless LAN adapter 13 (S145). Then, the process returns to S135. In contrast, if an operation to turn a page backward has been performed, the microcomputer 12 displays a slide image of page N-1 on the display panel 18 (S150), and transmits the slide image of page N-1 to the C-viewing terminal 30 via the wireless LAN adapter 13 (S155). Then, the process returns to S135.

In short, the microcomputer 12 is configured, when the supplier 1S performs the page-turning operation, to display the slide image corresponding to the operation on the display panel 18, and to have the same slide image as that displayed on the S-viewing terminal 10 displayed on the C-viewing terminal 30.

The page-turning operation is determined by whether or not a touch period at the finishing position is shorter than that at the starting position based on a correlation between the starting position and the finishing position read in the above-described user operation reading processing. If it is affirmatively determined and a direction of the page-turning operation is a forward one (or a backward one) specified in advance, the page-turning operation is treated as being performed in a forward direction (or in a backward direction).

### [Main processing in the C-viewing terminal]

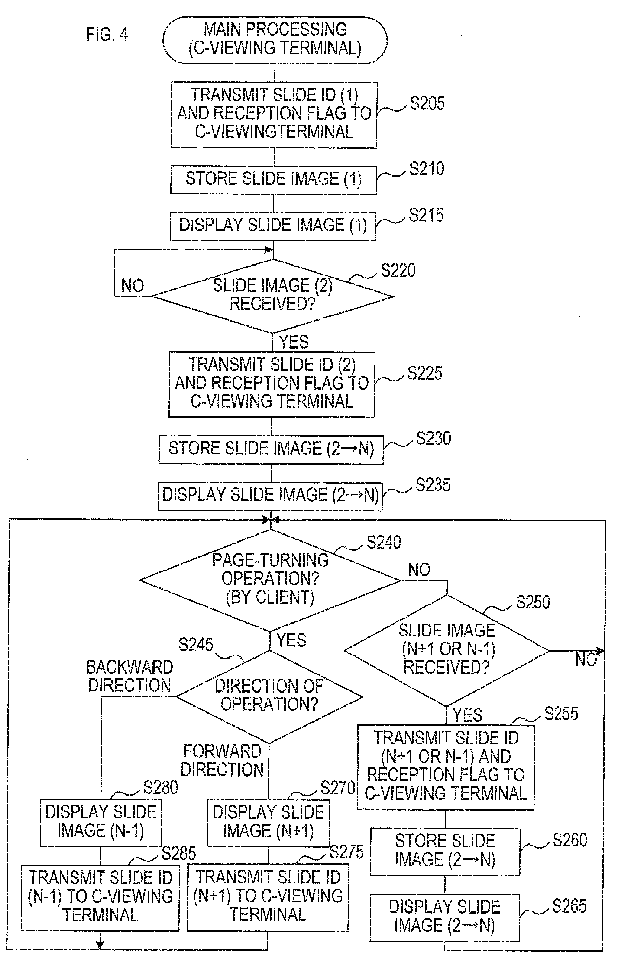

Next, a description will be made as to a main processing performed by the microcomputer 32 of the C-viewing terminal 30 with reference to a flowchart in FIG. 4. The processing is started when the slide image of the first page is received from the S-viewing terminal 10 via the wireless LAN adapter 33, and is finished when the above-described completion signal is received. Furthermore, it is presupposed that, in a case where the completion signal is received from the S-viewing terminal 10 via the wireless LAN adapter 33, the processing is finished after the microcomputer 32 transmits the completion signal to the C-portable terminal 40 via the near field communication unit 35.

As shown in FIG. 4, when the processing is started and the slide image of the first page is received from the S-viewing terminal 10 via the wireless LAN adapter 33, the microcomputer 32 transmits a reception flag indicating that the slide image has been received and the slide ID included in the slide image to the C-portable terminal 40 via the near field communication unit 35 (S205). Then, the microcomputer 32 stores the slide image of the first page in the hard disk 34 (S210), and displays the slide image on the display panel 38 (S215).

Next, the microcomputer 32 waits until the slide image of the second page is received from the 8-viewing terminal 10 via the wireless LAN adapter 33 (S220). If the slide image of the second page has been received, the microcomputer 32 similarly transmits the slide ID included in the slide image to the C-portable terminal 40 via the near field communication unit 35 together with the reception flag (S225). Then, the microcomputer 32 stores the slide image of the second page in the hard disk 34 (S230), and displays the slide image on the display panel 38 (S235).

A page of a slide image being displayed on the display panel 38 is hereinafter referred to as page N. The microcomputer 32 determines whether or not an operation to turn a page forward or backward has been performed by the client 1C (S240). If such an operation has been performed (including a case where a page operation command, which will be described later, is received from the C-portable terminal 40), the microcomputer 32 determines whether a direction of the page-turning operation is a forward one or a backward one (S245). In contrast, if the page-turning operation has not been performed, the microcomputer 32 determines whether or not it has received the slide image of page N+1 or page N-1 from the S-viewing terminal 10 via the wireless LAN adapter 33 (S250). If the slide image of page N+1 or page N-1 has not been received, the process returns to S240. In short, the microcomputer 32 is configured to wait until the page-turning operation is performed by the client 1C or until the slide image transmitted from the S-viewing terminal 10 is received.

If the slide image has been received in S250, the microcomputer 32 similarly transmits the slide ID included in the slide image to the C-portable terminal 40 via the near field communication unit 35 together with the reception flag (S255), and stores the received slide image in the hard disk 34 (S260). Furthermore, the microcomputer 32 displays the slide image on the display panel 38 (S265), and the process returns to S240. In S250, if the slide image, which had been already stored in the hard disk 34, such as the slide image of page N-1 has been received, S260 is skipped and the microcomputer 32 displays the slide image read out from the hard disk 34.

In this manner, the microcomputer 32 is configured, upon receipt of the slide image from the S-viewing terminal 10, to display the slide image and to transmit the slide ID included in the slide image to the C-portable terminal 40 together with the reception flag.

On the other hand, if the operation to turn a page forward has been performed in S245, the microcomputer 32 reads out the slide image of page N+1 from the hard disk 34 and displays the read-out slide image on the display panel 38 (S270). Furthermore, the microcomputer 32 transmits the slide ID for identifying the displayed slide image to the C-portable terminal 40 via the near field communication unit 35 (S275), and the process returns to S240. In contrast, if the operation to turn a page backward has been performed in S245, the microcomputer 32 reads out the slide image of page N-1 from the hard disk 34 and displays the read-out slide image on the display panel 38 (S280). Further, the microcomputer 32 transmits the slide ID (with no reception flag) for identifying the displayed slide image to the C-portable terminal 40 via the near field communication unit 35 (S285), and the process returns to S240.

In this manner, the microcomputer 32 is configured, after switching a display of the slide image based on the operation of the client 1C, to transmit only the slide ID included in the switched slide image to the C-portable terminal 40.

In the above situation, the configuration is such that, by reading out the slide image from the hard disk 34 and displaying the read-out slide image on the display panel 38, slide images not yet used in the presentation by the supplier 1S (i.e., slide images not yet received) are not to be shown to the client 1C.

In other words, while the slide images are shown to the client 1C at a pace of the supplier 1S in principle, when the client 1C wants to review a different slide image already used in the presentation, such an opportunity is exceptionally to be given. Moreover, in a case where the supplier 1S turns a page while the client 1C is reviewing the different slide image, a slide image of the turned page is forcibly to be shown to the client 1C.

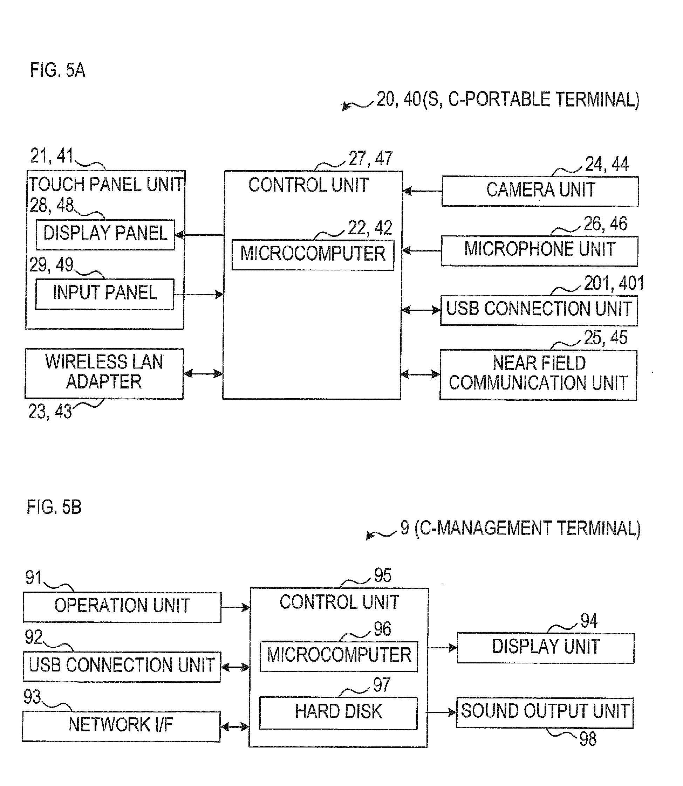

[Configuration of the portable terminals] Next, FIG. 5A is a block diagram showing a configuration of the portable terminals 20, 40. The portable terminals 20, 40 are both configured as a known multifunctional mobile phone (e.g., a smartphone) brought to a presentation site by the supplier 1S and the client 1C, respectively. Since the configuration of the portable terminals 20, 40 and the above-described configuration of the viewing terminals 10, 30 have a lot in common, differences will be mainly described.

As shown in FIG. 5A, the portable terminals 20, 40 are configured to respectively include touch panel units 21, 41 as a user interface that receives an input operation by a user, wireless LAN adapters 23, 43, near field communication units 25,45, and control units 27, 47. The touch panel units 21, 41 are known ones respectively include display panels 28, 48 and input panels 29, 49.

However, the display panels 28, 48 are smaller in size respectively than the display panels 18, 38 of the viewing terminals 10, 30 and are formed to a size that fits in a palm of the user. The wireless LAN adapters 23, 43 are devices for respectively connecting the portable terminals 20, 40 to the external network 4 via the wireless LAN router (not shown) and transmitting/receiving various data between the S-portable terminal 20 and the C-portable terminal 40. The near field communication units 25, 45 are configured to receive various signals transmitted from the viewing terminals 10, 30, respectively, through radio waves of a specific frequency band. The control units 27, 47 are constituted mainly by microcomputers 22, 42, respectively.

The portable terminals 20, 40 respectively further include camera units 24, 44 that are arranged on reverse sides of bodies of the portable terminals 20, 40 to pick up an image of a photographic subject; microphone units 26, 46 that are arranged on front sides of the bodies of the portable terminals 20, 40 to input ambient sounds; and USB connection units 201, 401 to be connected to the C-management terminal 9 or the like via a USB cable.

The camera units 24, 44 are known ones that include an image pickup device photoelectrically converting an optical subject imaged via a lens to retain charge and that generate image data based on a voltage signal inputted via the image pickup device. The camera units 24, 44 are operated in accordance with an operation command (an operation command relating to camera function) that is inputted via the touch panel units 21, 41, respectively.

The microphone units 26, 46 are known ones that include a microphone converting sounds collected from the environment into a voltage signal and that generate sound data based on the voltage signal inputted via the microphone. The microphone units 26, 46 are operated in accordance with an operation command (an operation command relating to sound recording functions) inputted via the touch panel units 21, 41, respectively.

The microcomputers 22, 42 perform a user operation reading processing that reads at least a starting position and a finishing position of a drag-and-drop operation (a release operation after touch and drag with a finger, a pen or the like) on the touch panel units 21, 41, respectively, based on an input from input panels 29, 49, respectively, as well as a position (a touch position) corresponding to the touch operation.

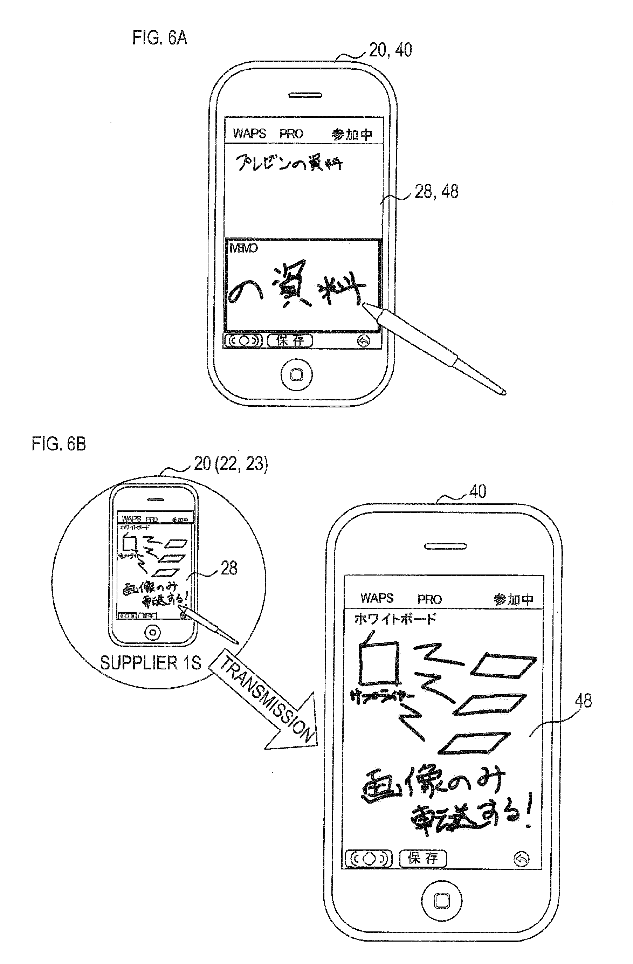

Moreover, the microcomputers 22, 42 perform a pen input control processing that displays an input content by a pen, which has been read in the user operation reading processing, on the display panels 28, 48, respectively, as characters, symbols, and graphics as it is (see FIG. 6A) and that stores the input content in a storage unit of the microcomputers 22, 42, respectively.

Then, as shown in FIG. 6B, the microcomputer 22 of the S-portable terminal 20 transmits the characters, the symbols, and the graphics inputted in the pen input control processing to all the C-portable terminals 40 simultaneously via the wireless LAN adapter 23 as supplementary information for supplementing explanation when the supplier 1S makes the presentation. Furthermore, the microcomputer 22 of the C-portable terminal 40 is configured to display the characters, the symbols, and the graphics indicated by the supplementary information on the display panel 48 upon receipt of the supplementary information from the C-portable terminal 40 via the wireless LAN adapter 23.

### [Main processing in the C-portable terminal]

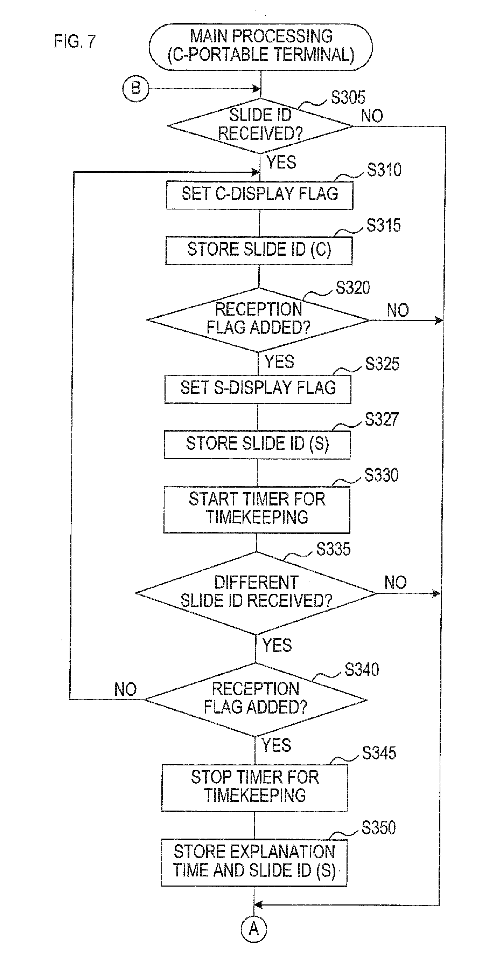

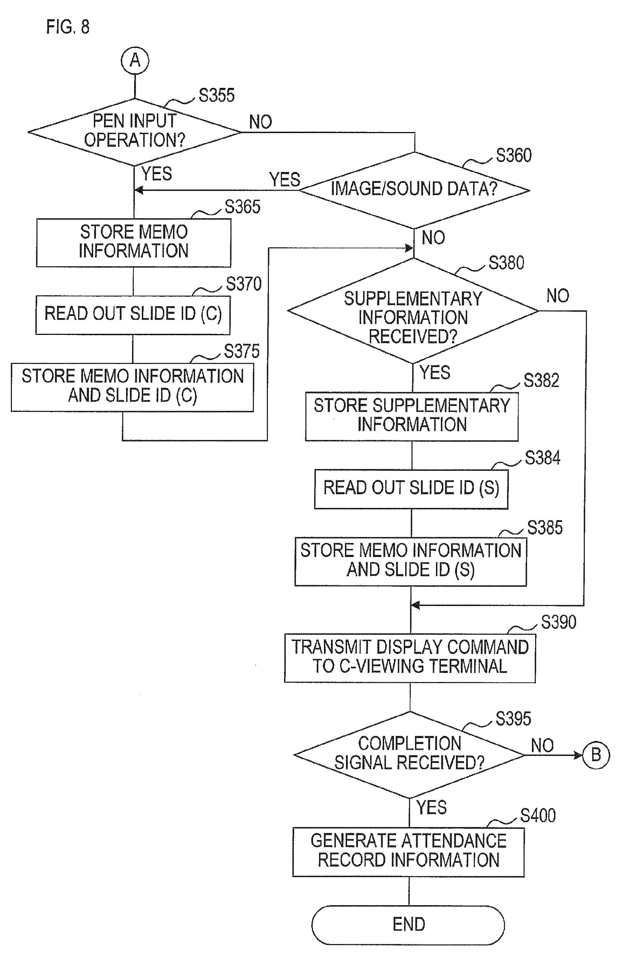

Next, a description will be made as to a main processing performed by the microcomputer 42 of the C-portable terminal 40 with reference to flowcharts in FIG. 7 and FIG. 8. The processing is started when an operation to initiate an application (a program) corresponding to the processing is performed by the client 1C.

As shown in FIGS. 7 and 8, when the processing is started, the microcomputer 42 (CPU) of the C-portable terminal 40 first determines whether or not the slide ID has been received from the C-viewing terminal 30 via the near field communication unit 45 (S305). If the slide ID has been received, the microcomputer 42 sets a C-display flag indicating that the slide image corresponding to the slide ID is now being displayed on the C-viewing terminal 30 (S310). In parallel, the microcomputer 42 stores the slide ID in the storage unit (S315).

Then, the microcomputer 42 determines whether or not the above-described reception flag is added to the slide ID received in S305 (S320). If the reception flag has been added, the microcomputer 42 sets a S-display flag indicating that the slide image corresponding to the slide ID is now being displayed on the S-viewing terminal 10 (S325). In parallel, the microcomputer 42 stores the slide ID in the storage unit (S327) and then starts the timer for timekeeping (S330). In contrast, if the slide ID has not been received in S305, the process proceeds to S355.

Next, the microcomputer 42 determines whether or not a slide ID different from that received in S305 has been received from the C-viewing terminal 30 via the near field communication unit 45 (S335). When such a slide ID has not been received, the process also proceeds to S355. In contrast, if the slide ID has been received in S335, the microcomputer 42 determines whether or not the reception flag has been added to the slide ID (S340), and if the reception flag has not been added, the process returns to S310.

In this manner, by setting the C-display flag or the S-display flag and storing the slide ID, the microcomputer 42 is configured to identify by whose operation, i.e., the client 1C's or the supplier's, the slide image being displayed on the C-viewing terminal 30 is displayed.

Here, if the reception flag has been added in S340, the microcomputer 42 stops the timer for timekeeping started in S330 (S345), and stores a time period measured by the timer for timekeeping in the storage unit as an explanation time required for the supplier 1S to explain one slide image, while associating the explanation time with the slide ID (the slide ID to which the S-display flag is set) (S350). Then, the process proceeds to S355. If the slide ID in S350 has been already stored in association with the explanation time, the microcomputer 42 adds the time period measured by the timer for timekeeping to the explanation time and stores the added result. In short, the microcomputer 42 is configured to record the time period required for the supplier 1S to explain each slide image in the presentation.

Subsequently, the microcomputer 42 determines whether or not the characters, the symbols and the graphics have been inputted in the above-described pen input control processing (S355). If any of these have been inputted, the inputted content is stored in the storage unit as memo information (pen input data). If none of the character, the symbols, and the graphics have been inputted, the microcomputer 42 determines whether or not image data or sound data has been received from the camera unit 44 or the microphone unit 46, respectively, by a different input operation by the client 1C (S360). If either of these has been received, the microcomputer 42 stores the data content in the storage unit as memo information in S355. In contrast, if none of the above has been inputted, the process proceeds to S380.

Next, the microcomputer 42 stores the memo information inputted in S355 or S360 in the storage unit (S365), and reads out the slide ID to which the C-display flag has been set in S310 from the storage unit (S370). The microcomputer 42 stores the read-out slide ID in association with the memo information stored in S365 (S375). In short, the microcomputer 42 is configured, when the client 1C inputs the memo information during the presentation, to identify the slide image corresponding to the memo information.

Subsequently, the microcomputer 42 determines whether or not the above-described supplementary information has been received from the S-portable terminal 20 via the wireless LAN adapter 43 (S380). If such information has not been received, the process proceeds to S395. In contrast, if the supplementary information has been received in S380, the microcomputer 42 stores the supplementary information in the storage unit (S382). In parallel, the microcomputer 42 reads out the slide ID to which the S-display flag has been set in S325 from the storage unit (S384), and stores the read-out slide ID in association with the supplementary information stored in S382 (S385). Then, the microcomputer 42 transmits a command to display the slide image corresponding to the stored slide ID on the C-viewing terminal 30 to the C-viewing terminal 30 via the near field communication unit 45 (S390). In short, the microcomputer 42 is configured, upon receipt of the supplementary information inputted by the supplier 1S during the presentation, to identify the slide image corresponding to the supplementary information. The microcomputer 42 is further configured to forcibly show the slide image corresponding to the supplementary information to the client 1C in such a situation.

Subsequently, the microcomputer 42 determines whether or not the above-described completion signal has been received from the S-portable terminal 20 via the wireless LAN adapter 43 (S395). If such a signal has not been received, the process returns to S305. In contrast, if the completion signal has been received, the microcomputer 42 generates attendance record information including the explanation time, the memo information, and the supplementary information stored in S350, S375, and S390, respectively, for each slide ID (S400). Furthermore, the microcomputer 42 stores the attendance record information in the storage unit to finish the processing.

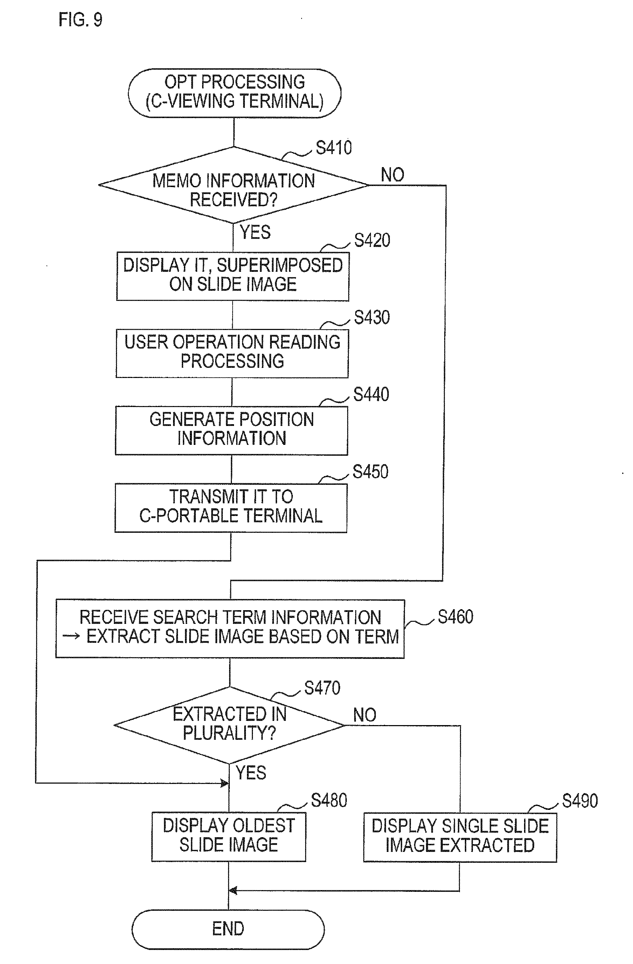

[Optional processing in the C-viewing terminal] Here, a description will be made as to an optional processing performed by the microcomputer 32 of the C-viewing terminal 30 with reference to a flowchart in FIG. 9. The processing is started when the memo information or search term information, which will be described later, is received from the C-portable terminal 40 via the near field communication unit 35. It is presupposed that the processing is performed in parallel with the above-described main processing (in the C-viewing terminal 30).

As shown in FIG. 9, the microcomputer 32 determines whether or not the received information is the memo information (S410). If the received information is the memo information, the microcomputer 32 displays the received memo information at a predetermined position (e.g., in the center of a screen) of the display panel 38 in a superimposed manner on the slide image being displayed (S420), and performs the above-described user operation reading processing (S430). A transmissivity of the memo information displayed on the slide image is set in advance to inhibit the slide image from being hidden.

Subsequently, the microcomputer 32 generates position information indicating a display position (i.e., display position with respect to the slide image) of the memo information, which has been moved by the operation of the client 1C based on the finishing position of the drop operation read by the user operation reading processing in S430 (S440). Then, the microcomputer 32 transmits the position information to the C-portable terminal 40 via the near field communication unit 35 (S450) to finish the processing.

In contrast, if the received information is not the memo information but the search term information in S410, the microcomputer 32 extracts a slide image which including a term indicated by the information from the hard disk 34 (S460). Then, the microcomputer 32 determines whether or not the slide image extracted in S460 exists in plurality (S470). If the slide image exists in plurality, the microcomputer 32 displays a slide image that has the oldest date and time of storage in the hard disk 34 (i.e., a slide image stored the earliest) on the display panel 38 (S480) to finish the processing. In contrast, if the slide image exists singularly, the microcomputer 32 displays the slide image (S490) to finish the processing. In a case where a slide image could not be extracted in S460, the microcomputer 32 displays a notification that a slide image corresponding to the search term information does not exist to finish the processing. In a case where an operation in which a page is turned forward or backward is performed by the client 1C while the slide image is being displayed in S480, the microcomputer 32 displays a slide image that has the second oldest date and time of storage in the hard disk 34. Subsequently, the microcomputer 32 displays a slide image corresponding to a direction of the page-turning operation.

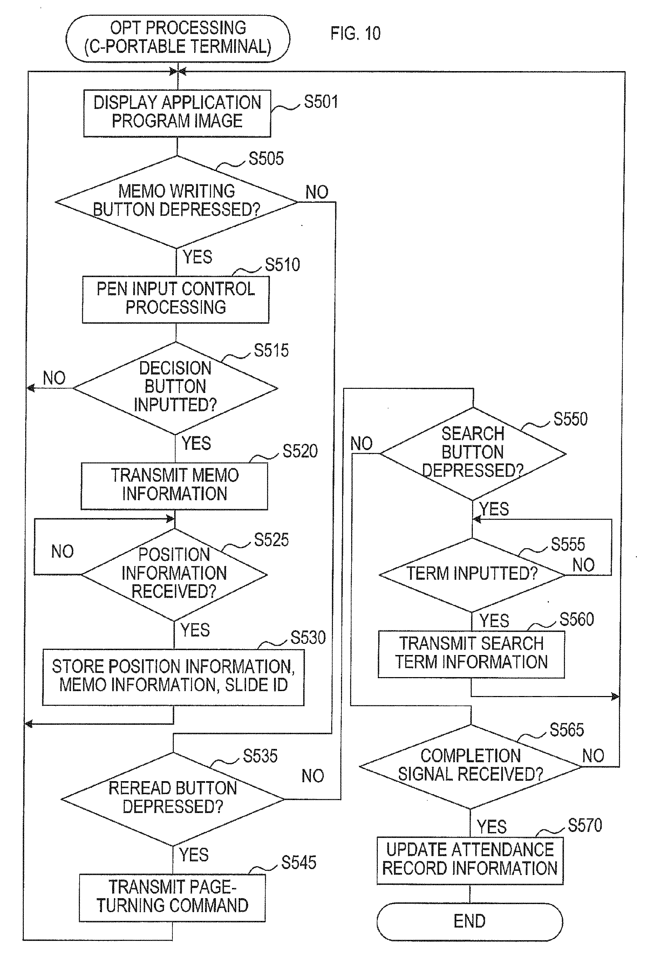

[Optional processing in the C-portable terminal] Next, a description will be made as to an optional processing performed by the microcomputer 42 of the C-portable terminal 40 with reference to a flowchart in FIG. 10. The processing is started when an operation to initiate an application (a program) corresponding to the processing is performed by the client 1C. It is presupposed that the processing is performed in parallel with the above-described main processing (in the C-portable terminal 40).

As shown in FIG. 10, when the processing is started, the microcomputer 42 (CPU) of the C-portable terminal 40 first displays an application program image, on which a search button 51, a memo writing button 53, a reread button 55, and the like are arranged (see FIG. 1), on the display panel 48 (S501).

Then, the microcomputer 42 determines whether or not an operation to depress the memo writing button 53, among the above buttons, by the client 1C has been inputted via the touch panel unit 41 (S505). If the operation has been inputted, the microcomputer 42 performs the above-described pen input control processing (S510). Subsequently, the microcomputer 42 determines whether or not a decision button (not shown) has been inputted via the touch panel unit 41 (S515). The decision button is used to reflect the memo information, which includes the characters, the symbols, the graphics and the like stored in the pen input control processing of S510, in the slide image now being displayed on the C-viewing terminal 30. If the decision button has not been inputted (i.e., if a cancellation button (not shown) has been inputted), the process returns to S505. In contrast, if the decision button has been inputted, the microcomputer 42 transmits the memo information to the C-viewing terminal 30 via the near field communication unit 45 (S520). Then, the microcomputer 42 waits until the above-described position information is received from the C-viewing terminal 30 via the near field communication unit 45 (S525). Upon receipt of the position information in S525, the microcomputer 42 associates the received position information, the memo information, and the slide ID to which the C-display flag has been set in S310 of the main processing with each other, and stores them in the storage unit (S530). Then, the process returns to S505.

In this manner, the microcomputer 42 is configured, when the client 1C has reflected the memo information at least in the slide image during the presentation, to record the display position of the memo information with respect to the slide image.

In contrast, if the operation to depress the memo writing button 53 has not been inputted in S505, the microcomputer 42 determines whether or not an operation to depress the reread button 55 by the client 1C has been inputted via the touch panel unit 41 (S535). If the operation has been inputted, the microcomputer 42 determines whether or not an operation in which a page is turned forward or an operation in which, a page is turned backward has been further performed by the client 1C. The microcomputer 42 transmits a command to turn a page in a direction of the page-turning operation (a page-turning command) to the C-viewing terminal 30 via the near field communication unit 45 (S545). Then, the process returns to S501.

If the operation to depress the reread button 55 has not been inputted in S535, the microcomputer 42 determines whether or not an operation to depress the search button 51 by the client 1C has been inputted via the touch panel unit 41 (S550). If the operation has been inputted, the microcomputer 42 waits until a term to be searched (a search term) is inputted by the client 1C (S555). If the search term is inputted, the microcomputer 42 transmits information indicating the search term (search term information) to the C-viewing terminal 30 via the near field communication unit 45 (S560). Then, the process returns to S501.

Furthermore, if the operation to depress the search button 51 has not been inputted in S550, the microcomputer 42 determines whether or not a completion signal has been received from the C-viewing terminal 30 via the near field communication unit 45 (S565). If such a signal has not been received, the process returns to S501. In contrast, if the completion signal has been received in S565, the microcomputer 42 updates the attendance record information by reflecting the position information stored in S530 in the attendance record information generated in S400 of the above-described main processing (S570) to finish the processing.

Due to the above, in the microcomputer 42 (the storage unit) of the C-portable terminal 40, the memo information (the pen input data, the image data, and the sound data) inputted by the client 1C during the presentation; the position information indicating the display position of the memo information with respect to the slide image; the supplementary information inputted by the supplier 1S; and the explanation time required for explanation of each slide image are to be recorded in association with the slide ID of the slide image corresponding to each of the above.

### [Configuration of the C-management terminal]

Next, FIG. 5B is a block diagram showing a configuration of the C-management terminal 9.
As shown in FIG. 5B, the C-management terminal 9 includes an operation unit 91 that inputs a content of an operation by the user, the operation being required to operate his/her own terminal via a mouse, keyboard, or the like; a USB connection unit 92 including a connector for inputting/outputting various information from/to an external terminal via a USB cable; a network I/F 93 including a connector for inputting/outputting various information via an external network; a display unit 94 for displaying various information; a control unit 95; and a sound output unit 98 for outputting a recorded content based on the sound data.

The display unit 94 includes a known display device such as a liquid crystal device or the like. By means of known graphical user interface (GUI) function provided in a personal computer, a user interface (UI) screen, onto which various information is inputted, and an image of a mouse pointer and the like are displayed.

The control unit 95 is constituted mainly by a microcomputer 96 including a CPU, a ROM, a RAM, an I/O, a bus line that connects these, and the like; and a hard disk 97. The CPU performs various processings including an image management processing, in which slide images are managed, based on a program stored in the ROM, an OS and various applications loaded to the RAM, and the like.

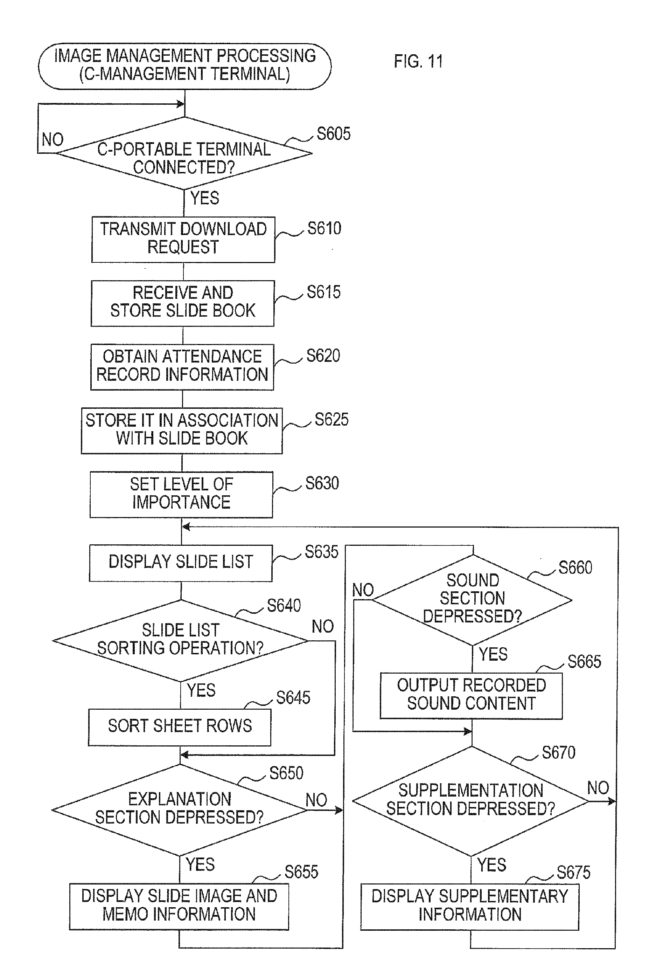

[Image management processing in the C-management terminal]
Here, a description will be made as to an image management processing performed by the microcomputer 96 (CPU) of the C-management terminal 9 with reference to a flowchart in FIG. 11. The processing is started when an operation to initiate an application (a program) corresponding to the processing is performed by the client 1C, and is finished when an operation to close the program is performed.

As shown in FIG. 11, when the processing is started, the microcomputer 42 (CPU) of the C-management terminal 9 first waits until a USB connection unit 401 of the C-portable terminal 40 is connected to the USB connection unit 92 of the C-management terminal 9 (S605). Upon connection, the microcomputer 42 transmits the above-described download request to the S-management server 7 via the network I/F 93 based on an operation content inputted from the operation unit 91 of the C-management terminal 9 (S610). Upon receipt of a slide book transmitted from the S-management server 7 in accordance with the download request via the network I/F 93, the microcomputer 42 stores the slide book in the hard disk 97 (S615).

The download request includes a designation ID for designating the slide book (header information) including a plurality of slide images, a password, and the like. These designation ID and password may be obtained from the C-portable terminal 40 via the USB connection unit 92. However, it is presupposed that these designation ID and password have been transmitted from the S-viewing terminal 10 via the C-viewing terminal 30 and has been stored in the C-portable terminal 40 in advance.

Next, the microcomputer 96 obtains the above-described attendance record information from the C-portable terminal 40 via the USB connection unit 92 (S620), and stores the attendance record information in the hard disk 97 in association with the slide book obtained in S615 (S625). Then, the microcomputer 96 extracts the explanation time and an information amount of the supplementary information and the memo information for each slide ID from the stored attendance record information. The microcomputer 96 sets levels of importance in such a manner that the more the explanation time and the information amount, the higher the level of importance (S630), and displays a slide list 50 on the display unit 94 (S635).

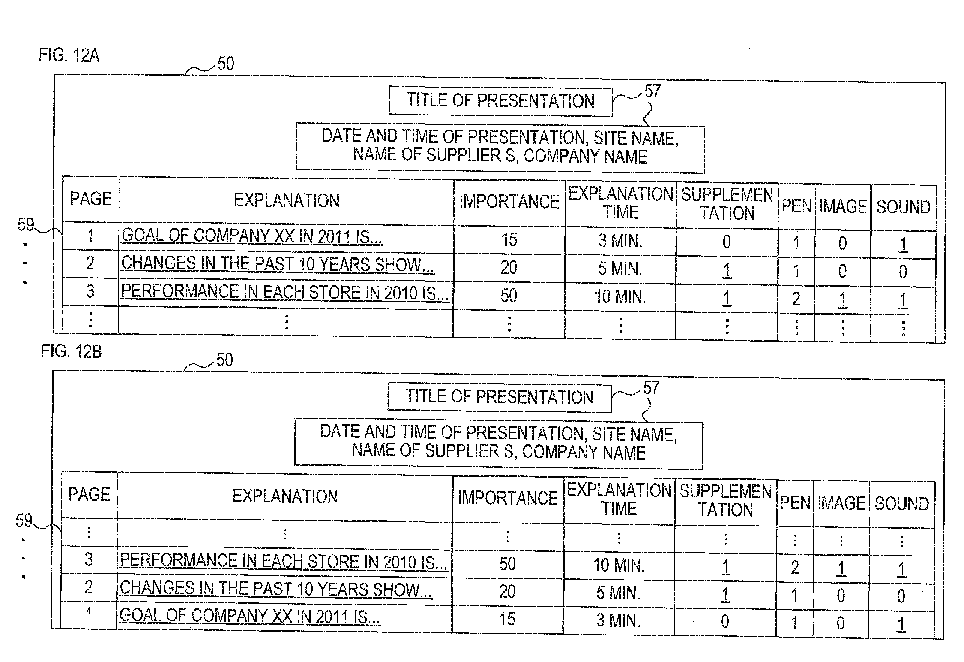

As shown in FIG. 12A, the slide list 50 is a list in which titles 57 and sheet rows 59 are associated with the slide ID (not shown). The titles 57 include a title of the presentation, date and time, a site name, a name of the supplier 1S, and a company name. The sheet row 59 includes a page number, explanation, a level of importance, explanation time, supplementary information (supplementation), and memo information (pen, image, and sound) of each slide image. Among these, in a section of the explanation in the sheet row 59, the explanation is displayed with an underline (equivalent to an icon), which is linkable to the corresponding slide image. In addition, in sections of the supplementary information and the memo information, each number of data is displayed with an underline, which is linkable to the corresponding data.

Subsequently, the microcomputer 96 determines whether or not a user operation has been performed to sort the slide list 50 based on the operation content inputted from the operation unit 91 (S640). If such an operation has not been performed, the process proceeds to S650. In contrast, if the user operation has been performed in S640, the sheet rows 59 are sorted in an order designated by the user operation. For example, if the level of importance is designated by the user operation, the slide list 50, in which the sheet rows 59 have been sorted in descending order of the levels of importance, is displayed on the display unit 94, as shown in FIG. 12B.

The microcomputer 96 determines whether or not the section of the explanation in the sheet row 59 of the slide list 50 has been depressed via the operation unit 91 (S650). If such a depression operation has not been performed, the process proceeds to S660. In contrast, if the section of the explanation has been depressed in S650, the microcomputer 96 loads the corresponding slide image, the pen input data, and the position information from the hard disk 97 based on the slide ID. The microcomputer 96 displays the slide image on the display unit 94 while superimposing the pen input data at the display position indicated by the position information. (S655).

The microcomputer 96 further determines whether or not the section of the sound in the sheet row 59 of the slide list 50 has been depressed via the operation unit 91 (S660). If such a depression operation has not been performed, the process proceeds to S670. In contrast, if the section of the sound has been depressed in S660, the microcomputer 96 loads the corresponding sound data from the hard disk 97 based on the slide ID. The microcomputer 96 outputs the recorded sound content based on the loaded sound data, from the sound output unit 98 (S665).

The microcomputer 96 still further determines whether or not the section of the supplementation in the sheet row 59 of the slide list 50 has been depressed via the operation unit 91 (S670). If such a depression operation has not been performed, the process returns to S635. In contrast, if the section of the supplementation has been depressed in S670, the microcomputer 96 loads the corresponding supplementary information from the hard disk 97 based on the slide ID, and displays the loaded supplementary information on the display unit 94 (S675). Then, the process returns to S635. In a case where the slide image has been displayed on the display unit 94 in S655, the supplementary information is displayed in a pop-up window in a superimposed manner on the slide image.

As above, in this processing, the slide book obtained from the S-management server 7 and the attendance record information obtained from the C-portable terminal 40 are managed in association with each other based on the slide ID. As a result, the client 1C can output various information (the memo information and the supplementary information) obtained in the presentation site in association with the slide image, without the trouble of bringing the C-management terminal 9 to the presentation site but just by bringing the C-portable terminal 40.

### [Effects]

As described above, in the presentation system 1 of the present embodiment, data communication is performed between the S-viewing terminal 10 with which the supplier 1S views the slide image prepared in advance to make the presentation and the C-viewing terminal 30 with which the client 1C views the slide image, whereby the slide image designated in the S-viewing terminal 10 is displayed on the C-viewing terminal 30.

Due to this, it becomes unnecessary to display the slide image on a screen using a projector or the like. Since the slide image is displayed on the C-viewing terminal 30 assigned to each client 1C, a visibility for the client 1C is improved. Therefore, it is possible for the supplier 1S to have the client 1C surely recognize the slide image designated by the supplier 1S himself/herself.

Moreover, in the presentation system 1, when the C-portable terminal 40 receives the input operation by the client 1C, the memo information indicating the inputted content is stored. In parallel, the slide ID corresponding to the slide image being displayed on the C-viewing terminal 30 then is obtained and the memo information is recorded in association with the slide ID.

Due to this, when the client 1C tries to record the memo information, the client 1C only has to use the C-portable terminal 40. Therefore, it becomes possible to maintain visibility without narrowing a display area of the slide image on the C-viewing terminal 30. Additionally, it becomes possible for the client 1C to easily recognize, after the presentation, which slide image was being used for explanation in the presentation when the memo information was recorded.

Consequently, according to the presentation system 1 of the present embodiment, it is possible to leave the memo information associably with the slide image without diminishing visibility for the client 1C. Therefore, it is possible to record the content of the presentation in a rational manner.

Furthermore, in the presentation system 1, when the C-management terminal 9 stores the slide book received from the S-management server 7 and receives the attendance record information from the C-portable terminal 40, the slide image corresponding to the slide ID of the information is stored while the memo information is reflected in the display position in the slide image based on the position information.

Therefore, the client 1C can take away the attendance record information concerning the presentation just by bringing the C-portable terminal 40 to the presentation site. The client 1C can effectively manage the contents of the presentation by means of the C-management terminal 9 because the attendance record information is thereafter to be associated with the slide book downloaded from a terminal (the C-management terminal 9) at office or home.

Moreover, in the presentation system 1, when the S-portable terminal 20 receives the input operation by the supplier 1S, the supplementary information indicating the content of the input operation is to be transmitted to the C-portable terminal 40, and when the C-portable terminal 40 receives the supplementary information from the S-portable terminal 20, the supplementary information is to be recorded in association with the slide ID. Consequently, it is possible to have the client surely recognize the supplementary information during the presentation, compared with a case where the supplier 1S makes a presentation using a whiteboard or the like.

### [Correspondence relationship between terms]

In the present embodiment, the touch panel unit 41 corresponds to an example of the receiving device; the storage unit of the microcomputer 42 corresponds to an example of the storage device; among the main processings performed by the microcomputer 42, S370 corresponds to an example of the slide ID obtaining device; and S375 corresponds to an example of the slide ID addition device.

### [Other embodiments]

While the embodiments of the present invention have been described above, the present invention is not limited to the above embodiments but can be practiced in various modes without departing from the scope of the spirit of the present invention.

For example, in the main processing of the above embodiment (the C-portable terminal 40), although the microcomputer 42 is configured to receive the slide ID (C) from the C-viewing terminal 30 all the time, the configuration is not limited to this. The microcomputer 42 may be configured to obtain the slide ID (C) from the C-viewing terminal 30 upon receipt of the input operation by the client 1C.

Moreover, in the main processing of the above embodiment (the C-portable terminal 40), although the microcomputer 42 is configured to receive the slide ID (S) from the S-viewing terminal 10 via the C-viewing terminal 30 all the time, the configuration is not limited to this. The microcomputer 42 may be configured to obtain the slide ID (S) from the S-viewing terminal 10 upon receipt of the input operation by the client 1C.

Furthermore, in the image management processing of the above embodiment (by the C-management terminal 9), although an example is shown in which the microcomputer 96 sorts the sheet rows 59 in descending order of the levels of importance and displays the slide list 50 on the display unit 94, the configuration is not limited to this. The microcomputer 96 may be configured to sort the sheet rows 59 in descending order or in ascending order based on the information amount or quantity of the page, the explanation time, the supplementary information, and the individual memo information (pen, image, and sound) in accordance with the input operation by the user.

## Claims

1. A presentation system in which data communication is performed between a presenter-side viewing terminal with which a presenter views a slide image prepared in advance to make a presentation; and an audience-side viewing terminal with which an audience views the slide image, whereby the slide image designated at the presenter-side viewing terminal is displayed on the audience-side viewing terminal,
the presentation system further comprising an audience-side portable terminal that receives an input operation by the audience,
wherein, upon receipt of the input operation by the audience, the audience-side portable terminal stores memo information indicating a content of the input operation; obtains a slide ID used to identify the slide image being displayed on the audience-side viewing terminal; and records the memo information in association with the slide ID.

2. The presentation system according to claim 1,
wherein the audience-side portable terminal transmits the memo information to the audience-side viewing terminal when obtaining the slide ID, and
wherein the audience-side viewing terminal displays the memo information on the slide image in a superimposed manner upon receipt of the memo information from the audience-side viewing terminal.

3. The presentation system according to claim 2,
wherein the audience-side viewing terminal includes a user interface that receives the input operation by a user and, after moving a display position of the memo information via the user interface, the audience-side viewing terminal transmits position information, which indicates the display position of the memo information with respect to the slide image, to the audience-side portable terminal, and
wherein the audience-side portable terminal records the memo information in association with the position information upon receipt of the position information from the audience-side viewing terminal.

4. The presentation system according to claim 3, further comprising a presenter-side management server that manages the slide image,
wherein, upon receipt of a download request from an audience-side management terminal, which is an external terminal, via the Internet network, the presenter-side management server transmits the slide image to the audience-side management terminal in accordance with the download request, and
wherein, when the audience-side management terminal stores the slide image received from the presenter-side management server and receives attendance record information including the memo information, the position information, and the slide ID from the audience-side portable terminal, the audience-side management terminal stores the slide image corresponding to the slide ID while reflecting the memo information in the display position in the slide image based on the position information.

5. The presentation system according to any one of claims 1 to 4, further comprising a presenter-side portable terminal that receives an input operation by the presenter,
wherein, upon receipt of the input operation by the presenter, the presenter-side portable terminal transmits supplementary information indicating a content of the input operation to the audience-side portable terminal, and
wherein, upon receipt of the supplementary information from the presenter-side portable terminal, the audience-side portable terminal records the supplementary information in association with the slide ID.

6. The presentation system according to claim 5, further comprising the presenter-side management server that manages the slide image,
wherein, upon receipt of the download request from the audience-side management terminal, which is an external terminal, via the Internet network, the presenter-side management server transmits the slide image to the audience-side management terminal in accordance with the download request, and
wherein, when the audience-side management terminal stores the slide image received from the presenter-side management server and receives the attendance record information including the memo information, the supplementary information, and the slide ID from the audience-side portable terminal, the audience-side management terminal stores the slide image corresponding to the slide ID in association with the memo information and the supplementary information of the slide image.

7. The presentation system according to claim 6,
wherein the audience-side management terminal sets levels of importance in such a manner that the more an information amount of the memo information and the supplementary information associated with the slide image is, the higher the level of importance is, and displays icons that can be linked to the slide images side by side in descending order of the level of importance.

8. The presentation system according to any one of claims 1 to 7,
wherein the audience-side portable terminal transmits a switch signal used to switch the slide images displayed on the audience-side viewing terminal either in selected descending order or ascending order, and
wherein the audience-side viewing terminal stores the slide images in order specified at the presenter-side viewing terminal and switches a display of the slide images in accordance with the switch signal received from the audience-side portable terminal.

9. The presentation system according to any one of claims 1 to 8,
wherein the audience-side portable terminal transmits a search signal used to search a term used in the presentation, and
wherein the audience-side viewing terminal stores the slide images in the order specified at the presenter-side viewing terminal and displays the slide image, which has been stored the earliest among the slide images including the term, based on the search signal received from the audience-side portable terminal.

10. A portable terminal used in a presentation system, in which data communication is performed between a presenter-side viewing terminal with which a presenter views a slide image prepared in advance to make a presentation; and an audience-side viewing terminal with which an audience views the slide image, whereby the slide image designated at the presenter-side viewing terminal is displayed on the audience-side viewing terminal,
the portable terminal comprising:
a receiving device that receives an input operation by the audience;
a storage device that stores memo information indicating a content of the input operation;
a slide ID obtaining device that obtains a slide ID used to identify the slide image being displayed on the audience-side viewing terminal when the input operation by the audience is received by the receiving device; and
a slide ID addition device that makes the storage device store the memo information in association with the slide ID obtained by the slide ID obtaining device.
